# EUROPÄISCHE PATENTSCHRIFT

(11) **EP 1 138 709 B1**
(45) Veröffentlichungstag und Bekanntmachung des Hinweises auf die Patenterteilung: **26.03.2008**
(21) Anmeldenummer: 01105735.3
(22) Anmeldetag: 08.03.2001
(51) Int. Cl.: C08G 18/48

(54) **Verfahren zur Herstellung von Hartschaumstoffen auf Isocyanatbasis**
Process for the preparation of rigid foams based on isocyanate
Procédé pour la préparation de mousses rigides à partir d'isocyanate

(30) Priorität: 25.03.2000 DE 10015001
(43) Veröffentlichungstag der Anmeldung: 04.10.2001
(73) Patentinhaber: BASF SE, 67056 Ludwigshafen (DE)
(72) Erfinder: Knorr, Gottfried, Dr., 01987 Schwarzheide (DE); Seifert, Holger, Dr., 49163 Bohmte (DE); Von Malotki, Peter, Dr., 49440 Lemförde (DE); Dinsch, Stefan, 01993 Schipkau (DE); Klassen, Johann, 32351 Stemwede (DE); Giesker, Christiane, 49080 Osnabrück (DE)

(56) Entgegenhaltungen:
- DE-A- 19 752 037
- DE-A- 19 806 740
- US-A- 5 690 855
- CHEMICAL ABSTRACTS, vol. 102, no. 24, Juni 1985 (1985-06) Columbus, Ohio, US; abstract no. 205065w, "Polyurethane foams" Seite 53; Spalte 2; XP002172153 & JP 05 922138 A (SANYO CHEMICAL)

## Beschreibung

Gegenstand der Erfindung ist ein Verfahren zur Herstellung von Hartschaumstoffen auf Isocyanatbasis durch Umsetzung von Polyisocyanaten mit Verbindungen mit mindestens zwei mit Isocyanatgruppen reaktiven Wasserstoffatomen. Unter Hartschaumstoffen auf Isocyanatbasis werden hierbei sowohl Polyurethan- als auch Polyurethan/Polyisocyanurat-Hartschaumstoffe verstanden.

Hartschaumstoffe auf Isocyanatbasis sind seit langem bekannt und werden vorwiegend zur Wärme- und Kälteisolation, z.B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung von Hartschaumstoffen auf Isocyanatbasis findet sich beispielsweise im Kunststoff-Handbuch, Band 7, Polyurethane 1. Auflage 1966, herausgegeben von Dr. R. Vieweg und Dr. A. Höchtlen, und 2. Auflage 1983, herausgegeben von Dr. Günter Oertel, und 3. Auflage 1993, herausgegeben von Dr. Günter Oertel, Carl Hanser Verlag, München, Wien.

Als Treibmittel zur Herstellung Hartschaumstoffe auf Isocyanatbasis wurden in der Vergangenheit zumeist Fluorchloralkane (FCKW), vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Als Nachfolger für die FCKW werden inzwischen zumeist Kohlenwasserstoffe, vorzugsweise Pentane, eingesetzt. So beschreibt EP-A-421 269 die Verwendung von Cyclopentan und/oder Cyclohexan, gegebenenfalls im Gemisch mit anderen Kohlenwasserstoffen, als Treibmittel.

Die mit Kohlenwasserstoffen getriebenen Hartschaumstoffe weisen jedoch zumeist gegenüber solchen, die mit FCKW getrieben wurden, eine höhere Dichte auf. Daher besteht die Forderung, die der Dichte der Schaumstoffe zu verringern, um Material einzusparen, ohne daß es jedoch zu einer Verschlechterung der Wärmeleitfähigkeit oder der mechanischen Eigenschaften der Polyurethane kommt. Dabei soll bei der Ausschäumung von Hohlräumen, beispielsweise Gehäusen von Kühlmöbeln, eine gleichmäßige Ausfüllung des Hohlraumes erfolgen, das heißt die flüssigen Aufbaukomponenten müssen in alle Teile des Hohlraums fließen. Bei zu geringem Fließvermögen der Schaumstoffe ist es bei Hohlräumen mit großem Volumen und/oder komplizierter Geometrie notwendig, den Hohlraum mit Schaumstoff zu überfüllen, wobei der sich dabei aufbauende Druck für eine gleichmäßige Verteilung des Schaumstoffs sorgt. Je besser die flüssigen Aufbaukomponenten die Hohlräume ausfüllen, desto weniger Hartschaumstoff auf Isocyanatbasis wird benötigt, um den Hohlraum vollständig auszuschäumen. Damit hat der im Hohlraum befindliche Hartschaumstoff auf Isocyanatbasis eine geringere Dichte, was neben der Einsparung von Material auch zu einer Verringerung des Gewichts der Endprodukte, beispielsweise Kühlmöbel, führt.

Unter Fließfähigkeit des Schaums wird hierbei das Fließverhalten der reagierenden Mischung aus Polyisocyanat und der Verbindung mit mindestens zwei mit Isocyanatgruppen reaktiven Wasserstoffatomen verstanden. Die Bestimmung der Fließfähigkeit erfolgt zumeist, indem die Weglänge bestimmt wird, welche die reagierende Mischung zurücklegt. Dies kann erfolgen, indem die Reaktionsmischung in einen flexiblen Schlauch aus Kunststoffolie, im folgenden als Schlauchtest bezeichnet, oder in eine normierte längliche Form, beispielsweise eine sogenannte Boschlanze, eingebracht und die Länge des so entstandenen Formkörpers bestimmt wird.

Üblicherweise werden zur Herstellung von Hartschaumstoffen auf Isocyanatbasis Polyole mit hohen Funktionalitäten und relativ kurzen Ketten verwendet, um eine optimale Vernetzung der Schäume zu erreichen. Die hierfür vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mgKOH/g. ihre Herstellung erfolgt vorzugsweise durch Anlagerung von Alkylenoxiden an H-funktionelle Startsubstanzen, insbesondere Alkohole und/oder Amine. Als Alkohole werden beispielsweise Saccharose, Glucose oder Sorbit, als Amine vorzugsweise aromatische Amine, beispielsweise Toluylendiamin, Diphenylmethan-Diamin und/oder Polyphenylen-Polymethylen-Polyamin eingesetzt. Die Viskosität derartiger Polyole liegt im allgemeinen in Bereichen von mehr als 5000 mPa.s bei 25°C, zumeist im Bereich zwischen 5000 mPa.s und 20 000 mPa.s bei 25°C. Das führt dazu, daß die Fließfähigkeit der Polyolkomponenten ungenügend ist. Um den Mangel zu beheben, werden der Polyolkomponente häufig niedermolekulare Alkohole zugesetzt, zumeist solche mit einem Molekulargewicht von kleiner 400. Derartige Verbindungen werden oft auch als Kettenverlängerer bezeichnet. Dem Zusatz derartiger Verbindungen sind jedoch Grenzen gesetzt, um eine Beeinträchtigung der mechanischen Eigenschaften und eine vorzeitige Vernetzung und damit eine Verringerung der Fließfähigkeit der Schaumstoffe zu verhindern. In EP-A-952 169 werden der Polyolkomponente Trimethylolpropan, Trimethylolethan und/oder deren Umsetzungsprodukte mit Alkylenoxiden zugesetzt. Die Hydroxylzahl der dort beschriebenen Produkte beträgt 300 bis 1300 mgKOH/g.

In EP-A-905 161 wird ein Verfahren zur Herstellung von Hartschaumstoffen auf Isocyanatbasis beschrieben, bei dem die Polyolkomponente mindestens einen Polyetheralkohol mit einer Funktionalität von mindestens 1,5 und einer Hydroxylzahl im Bereich zwischen 10 und 100 mgKOH/g enthält. Die dort beschriebenen Schaumstoffe weisen eine gute Temperaturstabilität und eine geringe Sprödigkeit auf.

Das Fließverhalten der nach den beschriebenen Verfahren hergestellten Schaumstoffe ist jedoch nicht für alle Einsatzgebiete, insbesondere für das Ausschäumen von Hohlräumen mit komplizierter Geometrie, ausreichend.

Aufgabe der Erfindung war es, Hartschaumstoffe auf Isocyanatbasis bereitzustellen, die eine gute Fließfähigkeit aufweisen, ohne das es zu einer Verschlechterung der mechanischen Eigenschaften kommt.

Die Aufgabe konnte überraschenderweise gelöst werden durch die Verwendung von Polyetheralkoholen, die herstellbar sind durch Anlagerung von Alkylenoxiden an H-funktionelle Startsubstanzen mit 2 bis 4 aktiven Wasserstoffatomen, insbesondere 3 bis 4 aktiven Wasserstoffatomen, insbesondere ausgewählt aus der Gruppe, enthaltend Glyzerin, Trimethylolpropan, Pentaerythrit, Propylenglykol, Diphenylmethandiamin und/oder Toluylendiamin, und die eine Hydroxylzahl, ermittelt nach DIN 53240, im Bereich zwischen 100 und 250 mgKOH/g, insbesondere 130 mgKOH/g und 200 mgKOH/g, aufweisen, als Einsatzkomponente bei der Herstellung der Hartschaumstoffe auf Isocyanatbasis.

Gegenstand der Erfindung ist demzufolge ein Verfahren zur Herstellung von Hartschaumstoffen auf Isocyanatbasis durch Umsetzung von
a) Polyisocyanaten mit
b) Verbindungen mit mindestens zwei mit Isocyanatgruppen reaktiven Wasserstoffatomen,
dadurch gekennzeichnet, daß die Verbindungen mit mindestens zwei mit Isocyanatgruppen reaktiven Wasserstoffatomen b) Polyetheralkohole bi) enthalten, die herstellbar sind durch Anlagerung von Alkylenoxiden an H-funktionelle Startsubstanzen mit 2 bis 4 aktiven Wasserstoffatomen, insbesondere 3 bis 4 aktiven Wasserstoffatomen, insbesondere ausgewählt aus der Gruppe, enthaltend Propylenglykol, Glyzerin, Trimethylolpropan, Pentaerythrit, Diphenylmethandiamin und/oder Toluylendiamin, und die eine Hydroxylzahl, ermittelt nach DIN 53240, im Bereich zwischen 130 mgKOH/g und 200 mgKOH/g, aufweisen, und ein Treibmittel eingesetzt wird, das bei Raumtemperatur flüssige Alkane und/oder Cycloalkane mit mindestens 4 Kohlenstoffatomen enthält.

Besonders bevorzugt ist die Verwendung von Polyetheralkoholen, die mit Glyzerin, Trimethylolpropan, Pentaerythrit, und/oder Toluylendiamin gestartet wurden.

Toluylendiamin und Diphenylmethandiamin können zur Herstellung der erfindungsgemäß eingesetzten Polyetheralkohole in beliebigen Isomerenverhältnissen eingesetzt werden.

Die erfindungsgemäß verwendeten Polyetheralkohole werden zumeist zusammen mit anderen Verbindungen mit mindestens zwei mit Isocyanatgruppen reaktiven Wasserstoffatomen eingesetzt.

Vorzugsweise erfolgt ihr Einsatz in einer Menge von 3 bis 50 Gew.-%, insbesondere von 15 bis 30 Gew.-%, bezogen auf das Gewicht aller Verbindungen mit mindestens zwei mit Isocyanatgruppen reaktiven Wasserstoffatomen. Vorzugsweise werden die erfindungsgemäß verwendeten Polyetheralkohole mit einer Funktionalität von 2 und 3 in einer Menge von 20 bis 30 Gew.-% und solche mit einer Funktionalität von 4 in einer Menge von 10 bis 25 Gew.-%, bezogen auf das Gewicht aller Verbindungen mit mindestens zwei mit Isocyanatgruppen reaktiven Wasserstoffatomen, eingesetzt. Die Herstellung der erfindungsgemäß verwendeten Polyetheralkohole erfolgt üblicherweise nach bekannten Verfahren, zumeist durch katalytische Anlagerung von niederen Alkylenoxiden an die genannten Startsubstanzen. Als Alkylenoxide werden vorzugsweise Ethylenoxid und/oder Propylenoxid eingesetzt. Auf das Verfahren zur Herstellung der Polyetheralkohole wird unten näher eingegangen.

Zu den für das erfindungsgemäße Verfahren zur Herstellung von Hartschaumstoffen auf Isocyanatbasis verwendeten Einsatzprodukten ist im einzelnen folgendes zu sagen:

Als organische Polyisocyanate kommen die an sich bekannten aliphatischen, cycloaliphatischen, araliphatischen und vorzugsweise aromatischen mehrwertigen Isocyanate in Betracht.

Im einzelnen seien beispielhaft genannt: Alkylendiisocyanate mit 4 bis 12 Kohlenstoffatomen im Alkylenrest, wie z.B. Hexamethylendiisocyanat-1,6; cycloaliphatische Diisocyanate, wie z.B. Cyclohexan-1,3- und -1,4-diisocyanat sowie beliebige Gemische dieser Isomeren, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate, wie z.B. 1,4-Xylylen-diisocyanat und Xylylen-diisocyanat-Isomerengemische, vorzugsweise jedoch aromatische Di- und Polyisocyanate, wie z.B. 2,4-und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Im einzelnen kommen beispielsweise in Betracht Urethangruppen enthaltende organische, vorzugsweise aromatische Polyisocyanate mit NCO-Gehalten von 33 bis 15 Gew.-%, vorzugsweise von 31 bis 21 Gew.-%, bezogen auf das Gesamtgewicht des Polyisocyanats. Geeignet sind auch Isocyanatgruppen enthaltende Prepolymere mit NCO-Gehalten von 25 bis 3,5 Gew.-%, vorzugsweise von 21 bis 14 Gew.-%, bezogen auf das Gesamtgewicht des Polyisocyanats, hergestellt aus Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Isocyanuratringe enthaltende Polyisocyanate mit NCO-Gehalten von 33 bis 15, vorzugsweise 31 bis 21 Gew.-%, bezogen auf das Gesamtgewicht des Polyisocyanats, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen vorzugsweise zur Anwendung zur Herstellung der Hartschaumstoffe auf Isocynatbasis: Mischungen aus modifizierten Urethangruppen enthaltenden organischen Polyisocyanaten mit einem NCO-Gehalt von 33,6 bis 15 Gew.-%, insbesondere solchen auf Basis von Toluylendiisocyanaten, 4,4'-Diphenylmethan-diisocyanat, Diphenylmethandiisocyanat-Isomerengemischen oder Roh-MDI und insbesondere 4,4'-, 2,4'- und 2,2'-Diphenylmethan-diisocyanat, Polyphenylpolymethylen-polyisocyanat, 2,4- und 2,6-Toluylen-diisocyanat, Roh-MDI mit einem Gehalt an Isomeren des Diphenylmethandiisocyanats von 33 bis 55 Gew.-% und Mischungen aus mindestens zwei der genannten Polyisocyanate, z.B. Roh-MDI oder Mischungen aus Toluylendiisocyanaten und Roh-MDI.

Als Verbindungen mit mindestens zwei mit Isocyanat reaktiven Wasserstoffatomen, die gemeinsam mit den erfindungsgemäß eingesetzten Polyetheralkoholen bi) verwendet werden können, kommen insbesondere Polyetheralkohole und/oder Polyesteralkohole zum Einsatz.

Bei der Herstellung der erfindungsgemäßen Hartschaumstoffe auf Isocyanatbasis wird zumeist mindestens ein Polyetheralkohol eingesetzt, der eine Funktionalität von mindestens 4 und eine Hydroxylzahl größer 250 mgKOH/g aufweist.

Die gemeinsam mit den erfindungsgemäß eingesetzten Polyetheralkoholen bi) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Polyetheralkoholen bi) verwendeten Polyetheralkohole haben zumeist eine Funktionalität zwischen 2 und 8, insbesondere 4 bis 8.

Insbesondere als Polyhydroxylverbindungen verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak.

Weiterhin eingesetzt werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxy-diphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin.

Die Polyetherpolyole besitzen eine Funktionalität von vorzugsweise 3 bis 8 und insbesondere 3 und 6 und Hydroxylzahlen von vorzugsweise 120 mgKOH/g bis 770 mgKOH/g und insbesondere 240 mgKOH/g bis 570 mgKOH/g.

Sofern zur Herstellung der gemeinsam mit den erfindungsgemäß verwendeten Polyetheralkoholen eingesetzten Polyetheralkohole als Startsubstanzen die zur Herstellung der erfindungsgemäß verwendeten Polyetheralkohole eingesetzten Verbindungen verwendet werden, haben die gemeinsam mit den erfindungsgemäß verwendeten Polyetheralkoholen eingesetzten Polyetheralkohole eine Hydroxylzahl außerhalb des Bereiches von 100 bis 250 mgKOH/g.

Es ist vorteilhaft, bei der Kombination der erfindungsgemäß verwendeten Polyetheralkohole bi) mit Polyetheralkoholen, die mit Zuckern, wie Saccharose oder Sorbit, gestartet wurden, die erfindungsgemäß verwendeten Polyetheralkohole bi) mit einer Hydroxylzahl im Bereich zwischen 150 und 200 mg KOH/g einzusetzen, während bei der Kombination der erfindungsgemäßen Polyetheralkohole mit solchen, die mit aromatischen Aminen gestartet wurden, die erfindungsgemäß verwendeten Polyetheralkohole bi) vorzugsweise eine Hydroxylzahl bis 250 mgKOH/g aufweisen können.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 1993.

Zu den Verbindungen mit mindestens zwei mit Isocyanatgruppen reaktiven Wasserstoffatomen gehören auch die gegebenenfalls mitverwendeten Kettenverlängerer und Vernetzer. Zur Modifizierung der mechanischen Eigenschaften kann sich jedoch der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen b), zum Einsatz.

Das erfindungsgemäße Verfahren wird üblicherweise in Anwesenheit von Treibmitteln, Katalysatoren sowie, falls erforderlich, Hilfs- und/oder Zusatzstoffen durchgeführt.

Es wird ein Treibmittel eingesetzt, das bei Raumtemperatur flüssige Alkane und/oder Cycloalkane mit mindestens 4 kohlenstoffatomen enthält. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80°C. Als weiteres Treibmittel kann beispielsweise Wasser verwendet werden, das mit Isocyanatgruppen unter Abspaltung von Kohlendioxid reagiert.

Als Katalysatoren werden insbesondere Verbindungen eingesetzt, welche die Reaktion der Isocyanatgruppen mit den mit Isocyanatgruppen reaktiven Gruppen stark beschleunigen. Insbesondere eingesetzt werden organische Metallverbindungen, vorzugsweise organische Zinnverbindungen, wie Zinn(II)-salze von organischen Säuren.

Weiterhin können als Katalysatoren stark basische Amine eingesetzt werden. Beispiele hierfür sind sekundäre aliphatische Amine, Imidazole, Amidine, Triazine sowie Alkanolamine.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe,

Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis werden die Polyisocyanate a), und die Verbindungen mit mindestens zwei mit Isocyanatgruppen reaktiven Wasserstoffatomen b) in solchen Mengen zur Umsetzung gebracht, daß das Äquivalenz-Verhältnis von NCO-Gruppen der Polyisocyanate a) zur Summe der reaktiven Wasserstoffatome der Komponenten b) 0,85 bis 1,75:1, vorzugsweise 1,0 bis 1,3:1 und insbesondere ungefähr 1,0 bis 1,15:1, beträgt. Sofern die Urethangruppen enthaltenden Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate a) zur Summe der reaktiven Wasserstoffatome der Komponente b) von 1,6 bis 60:1, vorzugsweise 3,0 bis 8:1 angewandt.

Die Hartschaumstoffe auf Isocyanatbasis können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, den Katalysatoren sowie den Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum Hartschaumstoff aushärten. Zum Ausschäumen von Hohlräumen wird die Reaktionsmischung in den Hohlraum eingebracht, wo er unter Ausfüllung des gesamten Hohlraumes aufschäumt.

Die nach dem erfindungsgemäßen Verfahren hergestellten Hartschaumstoffe auf Isocyanatbasis haben zumeist ein Verhältnis von freigeschäumter Roh-Dichte zu Formteildichte von 1:1,2 bis 1,35. Bei üblichen Schaumstoffen liegt dieses Verhältnis zumeist im Bereich zwischen 1:1,4 bis 1:1,5. Damit ist eine deutliche Einsparung von Material möglich. Überraschenderweise ist diese Verringerung der Dichte mit keiner Verschlechterung der mechanischen Eigenschaften der Schaumstoffe verbunden.

Die nach dem erfindungsgemäßen Verfahren hergestellten Hartschaumstoffe auf Isocyanatbasis finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

Die nach dem erfindungsgemäßen Verfahren hergestellten Hartschaumstoffe auf Isocyanatbasis weisen eine gute Fließfähigkeit auf. Bei ihrem Einsatz ist es möglich, selbst Hohlräume mit komplizierter Geometrie ohne die störende Ausbildung von Lunkern vollständig auszufüllen. Damit ist es möglich, diese Hohlräume mit weniger Material auszufüllen und damit die Herstellungskosten und auch das Gewicht der hergestellten Bauteile, insbesondere Kühlmöbel, Warmwasserspeicher und Fernheizungsrohre, zu erniedrigen. Trotz der geringen Dichte weisen die Schaumstoffe ausgezeichnete mechanische Eigenschaften, insbesondere eine hohe Druckfestigkeit, sowie eine geringe Wärmeleitfähigkeit auf.

Die Erfindung soll an nachstehenden Beispielen näher erläutert werden.

### Beispiele 1 bis 16

Die in den Tabellen 1 und 2 beschriebenen Polyolkomponenten, die durch Mischung der dort angegebenen Bestandteile hergestellt wurden, und die Isocyanatkomponenten wurden in einer Hochdruck-Verschäummaschine vom Typ Puromat^{®} PM 30 (Elastogran GmbH) gemischt, die Reaktionsmischung in ein Formwerkzeug der Abmessung 200x20x5 cm eingespritzt und dort aufschäumen gelassen. Von den so entstandenen Formkörpern wurde die Mindestfülldichte, die Formteilrohdichte und die Druckfestigkeit nach DIN 53421 bestimmt.

Unter Mindestfülldichte wird die Dichte bezeichnet, welche der Schaum aufweist, wenn er die Form gerade ausfüllt.

Die Fließfähigkeit wurde mittels Schlauchtest wie folgt bestimmt:

100 g der Reaktionsmischung wurden in einem Becher intensiv vermischt und unmittelbar nach der Vermischung der Komponenten in einen Kunststoffschlauch mit einem Durchmesser von 4,5 cm gegossen, der Schlauch einseitig verschlossen und die von der Reaktionsmischung zurückgelegte Schlauchlänge in cm bestimmt

**Tabelle 1 - Beispiele 1 bis 9**

| Beispiel | 1 (V) | 2 (V) | 3 | 4 | 5 | 7 | 8 | 9 |
|---|---|---|---|---|---|---|---|---|
| | | | | | | | | |
| Polyol 1 | 51 | 20 | 36 | 20 | 36 | - | - | - |
| Polyol2 | 30 | 61 1 | 20 | 36 | 20 | 69 | 69 | 69 |
| Polyol 3 | - | - | 25 | - | 25 | 10 | - | - |
| Polyol 4 | - | - | - | 25 | - | - | 10 | 10 |
| Stabilisator | 2 | 2 | 2 | 2 | 2 | 2,5 | 2,5 | 2,5 |
| Katalysator | 2 | 2 | 2 | 2 | 2 | 1,5 | 1,5 | 1,5 |
| Wasser | 2 | 2 | 2 | 2 | 2 | 2 | 2 | 2 |
| Cyclopentan | 9 | 11 | 13 | 9 | 11 | - | 15 | - |
| Iso-Pentan | 4 | - | - | 4 | - | - | - | - |
| Tetramethylsiloxan | - | 2 | - | - | 2 | 15 | - | 15 |
| Isocyanat | 141 | 133 | 120 | 116 | 120 | 144 | 144 | 144 |
| Schlauchlänge [cm] | 125 | 140 | 155 | 160 | 158 | 153 | 153 | 145 |
| Mindestfülldichte [kg/cm³] | 35 | 34 | 32,7 | 32 | 32,5 | 29,8 | 29,8 | 29,5 |
| Formteilrohdichte [kg/cm³] | 38,5 | 37,4 | 36 | 32,5 | 35,8 | 33 | 33 | 33 |
| Druckfestigkeit [N/mm²] | 0,14 | 0,15 | 0,13 | 0,14 | 0,14 | 0,13 | 0,13 | 0,14 |

| | | | | | | | | |
|---|---|---|---|---|---|---|---|---|
| Polyol 1: Polyetheralkohol auf Basis von Sorbit und Propylenoxid, Hydroxylzahl 490 mgKOH/g Polyol 2: Polyetheralkohol auf Basis von Toluylendiamin, Ethylenoxid und Propylenoxid, Hydroxylzahl 400 mgKOH/g Polyol 3: Polyetheralkohol auf Basis von Toluylendiamin, Ethylenoxid und Propylenoxid, Hydroxylzahl 160 mgKOH/g Polyol 4: Polyetheralkohol auf Basis von Trimethylolpropan und Propylenoxid, Hydroxylzahl 160 mgKOH/g Stabilisator: Silikon-Schaumstabilisator B 8467 der Firma Goldschmidt AG Katalysator: Dimethylcyclohexylamin Isocyanat: Roh-MDI, NCO-Gehalt 31,5 Gew.-% | | | | | | | | |

Die Mengen der Einsatzstoffe ist in Gewichtsteilen angegeben.

**Tabelle 2 - Beispiele 10 bis 16**

| Beispiel | 10 | 11 | 12 | 13 | 14 (V) | 15 | 16 |
|---|---|---|---|---|---|---|---|
| | | | | | | | |
| Polyol 1 | 64 | 59 | 59 | 59 | 59 | 59 | 59 |
| Polyol 5 | - | - | - | - | - | - | 25 |
| Polyol 6 | 20 | 25 | - | - | - | - | - |
| Polyol 7 | - | - | - | - | 25 | - | - |
| Polyol 8 | - | - | 25 | - | - | - | - |
| Polyol 9 | - | - | - | 25 | - | - | - |
| Polyol 10 | - | - | - | - | - | 25 | - |
| Stabilisator | 2 | 2 | 2 | 2 | 2 | 2 | 2 |
| Katalysator | 2 | 2 | 2 | 2 | 2 | 2 | 2 |
| Wasser | 2 | 2 | 2 | 2 | 2 | 2 | 2 |
| Cyclopentan | 7 | 7 | 7 | 7 | 7 | 7 | 7 |
| Iso-Pentan | 3 | 3 | 3 | 3 | 3 | 3 | 3 |
| Isocyanat | 138 | 137 | 137 | 128 | 140 | 132 | 135 |
| Schlauchlänge [cm] | 150 | 152 | 150 | 155 | 135 | 153 | 151 |
| Mindestfülldichte [kg/cm³] | 32,7 | 31,6 | 31,6 | 30,1 | 33 | 32,6 | 31,9 |
| Formteilrohdichte [kg/cm³] | 35 | 35 | 35 | 35 | 35 | 35 | 35 |
| Druckfestigkeit [N/mm²] | 0,14 | 0,14 | 0,14 | 0,14 | 0,13 | 0,14 | 0,15 |

| | | | | | | | |
|---|---|---|---|---|---|---|---|
| Polyol 5: Polyetheralkohol auf Basis von Glycerin und Propylenoxid, Hydroxylzahl 200 mgKOH/g Polyol 6: Polyetheralkohol auf Basis von Propylenglykol, und Propylenoxid, Hydroxylzahl 250 mgKOH/g Polyol 7: Polyetheralkohol auf Basis von Trimethylolpropan und Propylenoxid, Hydroxylzahl 300 mgKOH/g Polyol 8: Polyetheralkohol auf Basis von Trimethylolpropan und Propylenoxid, Hydroxylzahl 200 mgKOH/g Polyol 9: Polyetheralkohol auf Basis von Trimethylolpropan und Propylenoxid, Hydroxylzahl 100 mgKOH/g Polyol 10: Polyetheralkohol auf Basis von Pentaerythrit und Propylenoxid, Hydroxylzahl 150 mgKOH/g | | | | | | | |

Die Menge der Einsatzstoffe ist in Gewichtsteile angegeben.

## Patentansprüche

1. Verfahren zur Herstellung von Hartschaumstoffen auf Isocyanatbasis durch Umsetzung von
a) Polyisocyanaten mit
b) Verbindungen mit mindestens zwei mit Isocyanatgruppen reaktiven Wasserstoffatomen,
**dadurch gekennzeichnet, daß** die Verbindungen mit mindestens zwei mit Isocyanatgruppen reaktiven Wasserstoffatomen b) Polyetheralkohole bi) enthalten, die herstellbar sind durch Anlagerung von Alkylenoxiden an H-funktionelle Startsubstanzen mit 3 bis 4 aktiven Wasserstoffatomen, und die eine Hydroxylzahl, ermittelt nach DIN 53240 im Bereich zwischen 130 mg KOH/g und 200 mg KOH/g aufweisen, und ein Treibmittel eingesetzt wird, das bei Raumtemperatur flüssige Alkane und/oder Cycloalkane mit mindestens 4 Kohlenstoffatomen enthält.

2. Verfahren nach Anspruch 1, **dadurch gekennzeichnet, daß** die zur Herstellung der Polyetheralkohole bi) eingesetzten H-funktionellen Startsubstanzen ausgewählt sind aus der Gruppe, enthaltend Glyzerin, Trimethylolpropan, Propylenglykol, Pentaerythrit, Diphenylmethandiamin und/oder Toluylendiamin.

3. Verfahren nach Anspruch 1, **dadurch gekennzeichnet, daß** die Polyetheralkohole bi) in einer Menge von 3 bis 50 Gew.%, bezogen auf die Komponente b), eingesetzt werden.

4. Verfahren nach Anspruch 1, **dadurch gekennzeichnet, daß** die Polyetheralkohole bi) in einer Menge von 15 bis 30 Gew.-%, bezogen auf die Komponente b), eingesetzt werden.

5. Verfahren nach Anspruch 1, **dadurch gekennzeichnet, daß** die Polyetheralkohole bi) in Kombination mit mindestens einem Polyetheralkohol mit einer Funktionalität größer 4 und einer Hydroxylzahl größer 250 mgKOH/g eingesetzt werden.

6. Hartschaumstoffe auf Isocyanatbasis, herstellbar nach einem der Ansprüche 1 bis 5.

## Claims

1. A process for producing rigid foams based on isocyanate by reacting
a) polyisocyanates with
b) compounds containing at least two hydrogen atoms which are reactive toward isocyanate groups,
wherein the compounds b) containing at least two hydrogen atoms which are reactive toward isocyanate groups comprise polyether alcohols bi) which can be prepared by addition of alkylene oxides on to H-functional starter substances having from 3 to 4 active hydrogen atoms and have a hydroxyl number determined in accordance with DIN 53240 in the range from 130 mgKOH/g to 200 mgKOH/g, and a blowing agent is used that comprises alkanes and/or cycloalkanes which are liquid at room temperature and have at least 4 carbon atoms.

2. The process according to claim 1, wherein the H-functional starter substances used for preparing the polyether alcohols bi) are selected from the group comprising glycerol, trimethylolpropane, propylene glycol, pentaerythritol, diphenylmethane diamine and/or toluenediamine.

3. The process according to claim 1, wherein the polyether alcohols bi) are used in an amount of from 3 to 50% by weight, based on the component b).

4. The process according to claim 1, wherein the polyether alcohols bi) are used in an amount of from 15 to 30% by weight, based on the component b).

5. The process according to claim 1, wherein the polyether alcohols bi) are used in combination with at least one polyether alcohol having a functionality of greater than 4 and a hydroxyl number greater than 250 mgKOH/g.

6. A rigid foam based on isocyanate which can be produced according to any of claims 1 to 5.

## Revendications

1. Procédé de fabrication de mousses dures à base d'isocyanate par réaction de
a) polyisocyanates avec
b) des composés ayant au moins deux atomes d'hydrogène réactifs vis-à-vis des groupes isocyanate,
**caractérisé en ce que** les composés b) ayant au moins deux atomes d'hydrogène réactifs vis-à-vis des isocyanates contiennent des alcools de polyéther bi), qui peuvent être préparés par addition d'oxydes d'alkylène à des substances de départ à fonctionnalité hydrogène ayant 3 à 4 atomes d'hydrogène actifs, et qui présentent un indice d'hydroxyle, déterminé selon la norme DIN 53240 dans la plage comprise entre 130 mg de KOH/g et 200 mg de KOH/g, et un agent expansif est utilisé, qui contient à température ambiante des alcanes liquides et/ou des cycloalcanes ayant au moins 4 atomes de carbone.

2. Procédé selon la a revendication 1, **caractérisé en ce que** les substances de départ à fonctionnalité H utilisées pour la préparation, des alcools de polyéther bi) sont sélectionnées parmi le groupe contenant la glycérine, le triméthylènepropane, le propylèneglycol, la pentaérythrite, la diphénylméthanediamine et/ou la toluylènediaimine.

3. Procédé selon la revendication 1, **caractérisé en ce que** les alcools de polyéther bi) sont utilisés en une quantité de 3 à 50 % en poids, par rapport au composant b).

4. Procédé selon la revendication 1, **caractérisé en ce que** les alcools de polyéther bi) sont utilisés en une quantité de 15 à 30 % en poids, par rapport au composant b).

5. Procédé selon la revendication 1, **caractérisé en ce que** les alcools de polyéther bi) sont utilisés en combinaison avec au moins un alcool de polyéther ayant une fonctionnalité supérieure à 4 et un indice d'hydroxyle supérieur à 250 mg de KOH/g.

6. Mousses dures à base d'isocyanate, que l'on peut fabriquer selon l'une quelconque des revendications 1 à 5.
